Europäisches Patentamt

European Patent Office

Office européen des brevets

(19)

(11) Publication number: **0 481 106 A1**

# EUROPEAN PATENT APPLICATION

(12)

(21) Application number: **90119756.6**

(22) Date of filing: **15.10.90**

(51) Int. Cl.⁵: **B32B** 15/06, B44C 5/00

(43) Date of publication of application:
**22.04.92 Bulletin 92/17**

(84) Designated Contracting States:
**AT BE CH DE ES FR GB GR IT LI LU NL SE**

(71) Applicant: **Kao, Pei Chin**
**3rd Floor, No. 35, Ching Chung Street**
**Ching Mei Chu, Taipei(TW)**

(72) Inventor: **Kao, Pei Chin**
**3rd Floor, No. 35, Ching Chung Street**
**Ching Mei Chu, Taipei(TW)**

(74) Representative: **Casalonga, Axel et al**
**BUREAU D.A. CASALONGA - JOSSE**
**Morassistrasse 8**
**W-8000 München 5(DE)**

(54) **Shapeable decorative plate.**

(57) A shapable decorative plate includes a magnetic rubber layer (30), an aluminum layer (20) and a leather layer (10). The magnetic rubber layer (30) and the aluminum layer (20) are bonded together and the leather layer (10) is attached to the other side of the aluminum layer (20).

FIG. 5

EP 0 481 106 A1

The present invention relates to a decorative plate which can be formed into verous shapes.

Conventionally, decorations are made with fixed shapes. We can only pick the decorations that are closest to our favorite, not exactly our favorite. We can never obtain exactly our favorite, unless we make the decorations ourselves. That is, we have to deal with lots of paper and glue, from which we may try to make the decorations. It is certainly a hard job. Supposing that we finally have the decorations made, we have likely produced not only decorations but also lots of waste. But most importantly, we can not change the shapes of the decorations after they are made, but must go through this troublesome procedures each time we desire a new decoration.

It is therefore an object of the present invention to provide a shapable decorative plate to mitigate and/or obviate the afore-mentioned problems.

It is an object of the present invention to provide a decorative plate including at least one magnetic rubber layer which can be formed into verious shapes and to which ferreous decorations can be attached.

It is another object of the present invention to provide a decorative plate including at least one aluminum layer for maintaining the decorative plate in a certain shape until the next shaping.

It is the other object of the present invention to provide a decorative plate including at least one leather layer for aethetic effect.

These and additional objects, if not set forth specifically herein, will be readily apparent to those skilled in the art from the detailed description provided below, with appropriate reference to the accompanying drawings.

In the drawings:

FIG 1. is a perspective view of a preferred embodiment of a shapable decorative plate according to the present invention;

FIG 2. is a sectional view of a first embodiment of the shapable decorative plate according to the present invention;

FIG 3. is a sectional view of a second embodiment of the shapable decorative plate according to the present invention;

FIG 4. is a sectional view of a third embodiment of the shapable decorative plate according to the present invention;

FIG 5. is a sectional view of a fourth embodiment of the shapable decorative plate according to the present invention;

FIG 6. is a perspective view of the preferred embodiment of the shapable decorative plate according to the present invention, in which the decorative plate is shaped as a wave;

FIG 7. is a perspective view of the preferred embodiment of the shapable decorative plate according to the present invention, in which the decorative plate is shaped into a tube;

FIG 8. is a perspective view of the preferred embodiment of the shapable decorative plate according to the present invention, in which the decorative plate is shaped into wave-like holder;

FIG 9. is a perspective view of the preferred embodiment of the shapable decorative plate according to the present invention, in which the decorative plate is shaped into a partition;

FIG 10. is a perspective view of the preferred embodiment of the shapable decorative plate according to the present invention, in which the decorative plate is stamped with a drawing; and

FIG 11. is a perspective view of the preferred embodiment of the shapable decorative plate according to the present invention, in which the decorative plate is twisted.

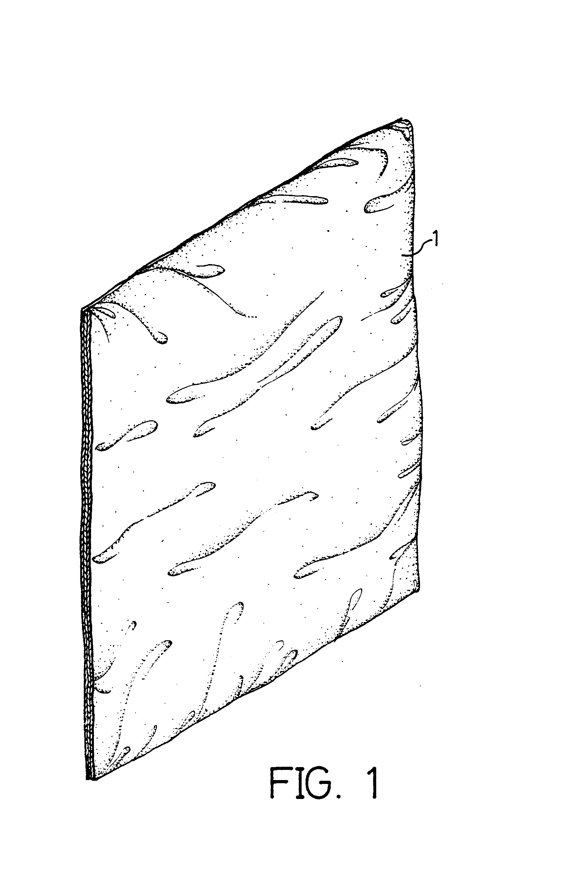

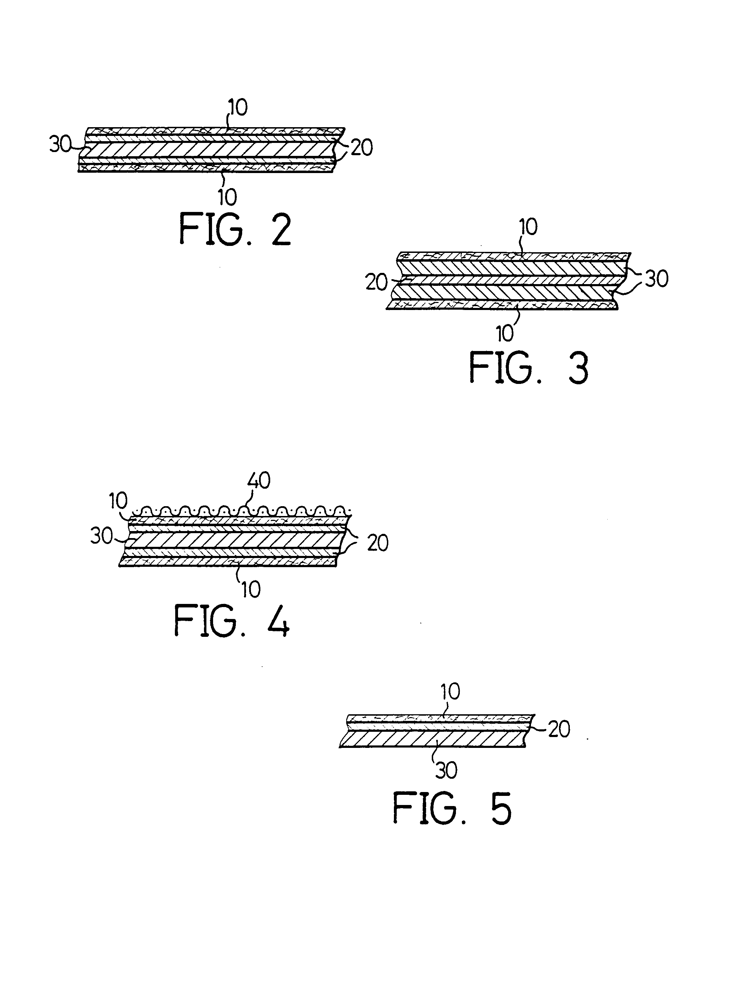

Refer to FIGS. 1 and 2, where a first embodiment of a decorative plate 1 according to the present invention is shown. The decorative plate 1 includes a magnetic rubber layer 30, an aluminum layer 20 attached to each side of the magnetic rubber 30, and a leather layers 10 attached to each outer side of the aluminum layers 20.

In FIG. 3, a second embodiment of the decorative plate 1 is shown. This embodiment includes an aluminum layer 20, a magnetic rubber layer attached to each side of the aluminum layer 20, and a leather layer 10 attached to each outer side of the magnetic rubber layer 30.

In FIG. 4, a third embodiment of decorative plate 1 is shown. This embodiment includes a magnetic rubber 30, an aluminum layer 20 attached to each side of the magnetic rubber layer 30, a leather layer 10 attached to each outer side of the aluminum layer 20, and a net 40 attached to the outer side of one of the leather layers.

In FIG. 5, in which a fourth embodiment of the decorative plate 1 is shown. This embodiment includes an aluminum layer 20, a magnetic rubber layer 30 attached to one side of the aluminum layer 20, and a leather layer 10 attached to the other side of the aluminum layer 20.

In FIG. 2 through 5, the magnetic rubber layer 30 is for attaching ferreous decorations. The aluminum layer 20 is for keeping the decorative plate 1 in shape. The leather layer 10 is for aethetic effect. The net 40 is for attaching decorations. The leather layer can be replaced by a cloth.

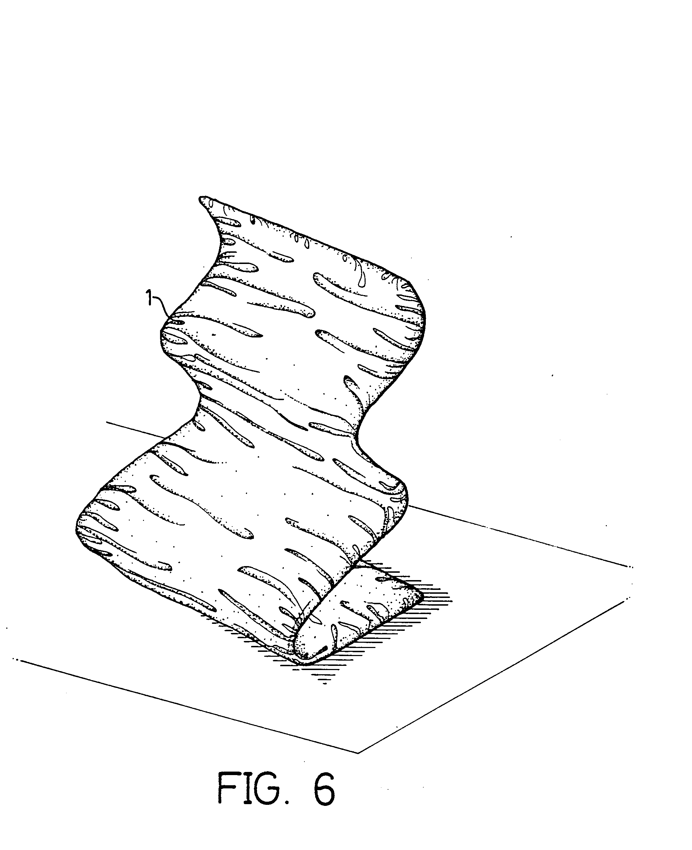

In FIG. 6, the decorative plate 1 is shaped in a curve that looks like a wave.

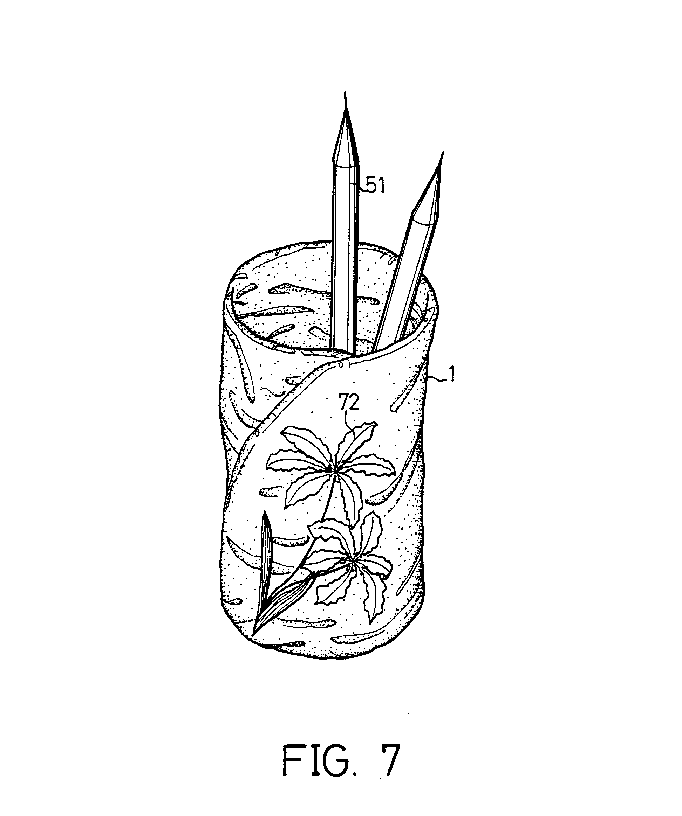

In FIG. 7, the decorative plate 1 is rolled into a tube for holding a pen 51, and ferreous flowers 72 are attached thereto.

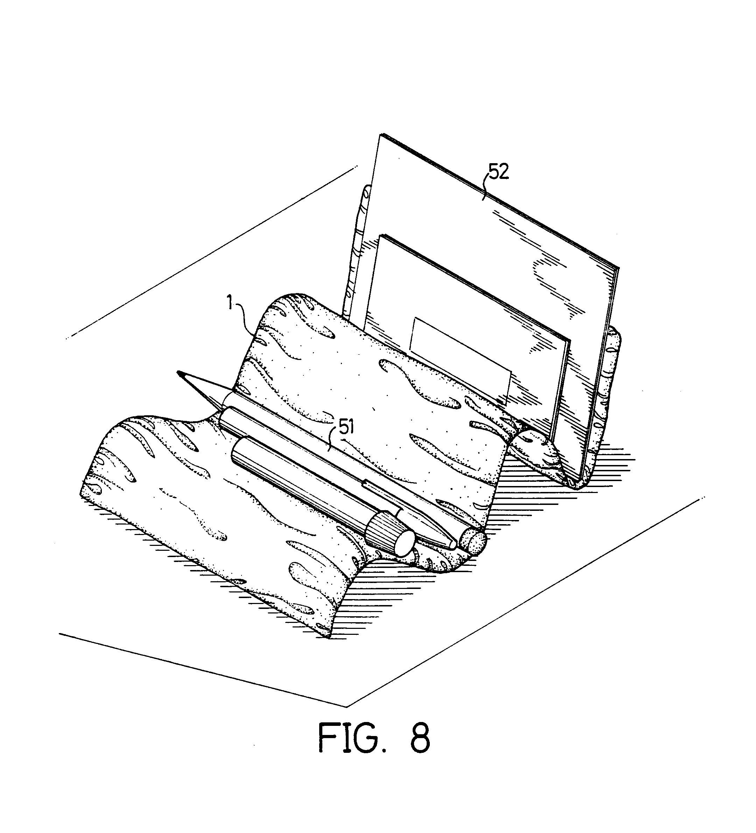

In FIG. 8, the decorative plate 1 is shaped into a wave-like holder for pens 51 and envelopes 52.

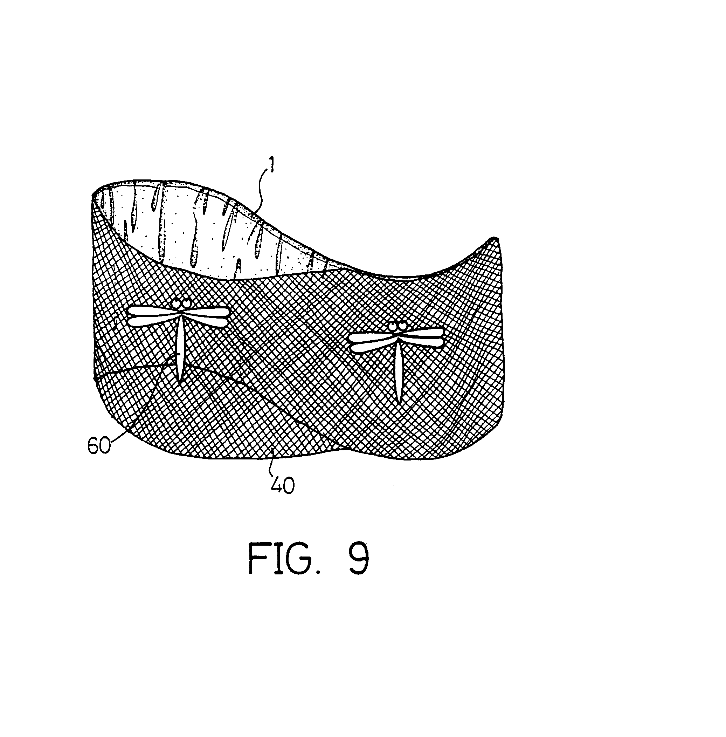

In FIG. 9, the decorative plate 1 is shaped into a partition on which decorations 60 are hung.

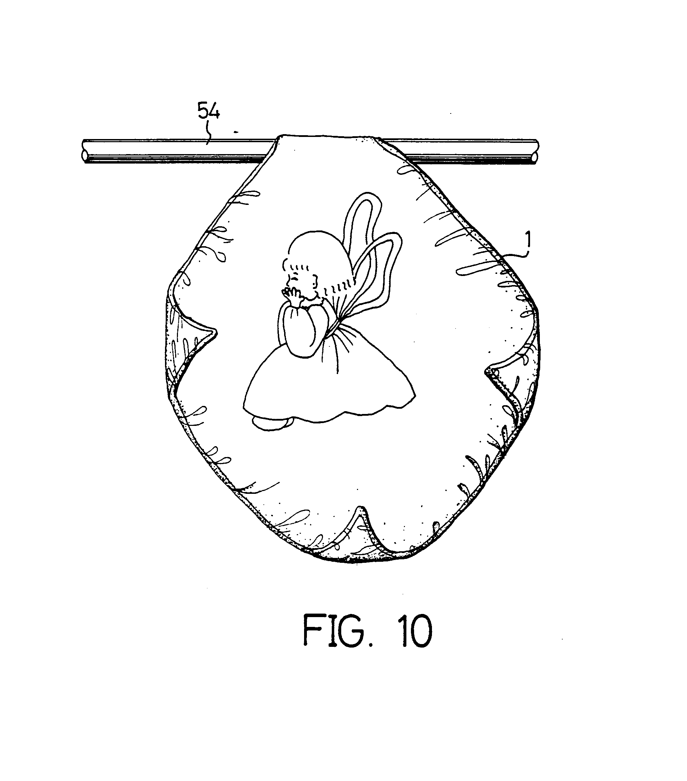

In FIG. 10, the decorative plate 1 is so shaped that one corner of it is bent into a hook, and thus the decorative plate can be hung on a rod 54.

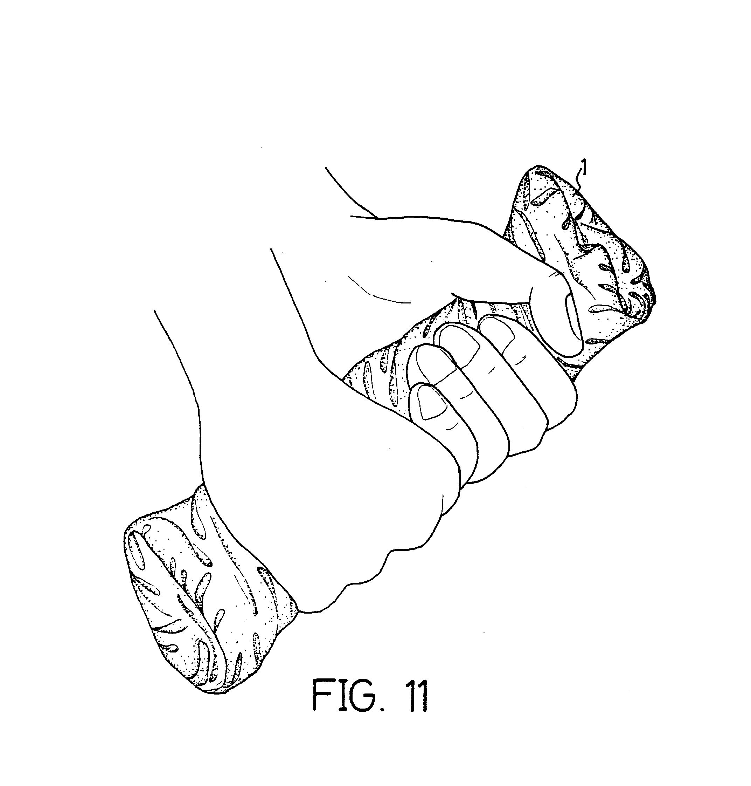

In FIG. 11, the decorative plate 1 is shown twisted by its owners, having provided a vent for their emotions.

While the present invention has been explained in relation to its preferred embodiment, it is to be understood that various modifications thereof will be apparent to those skilled in the art upon reading this specification. Therefore, it is to be understood that the invention disclosed herein is intended to cover all such modifications as shall fall within the scope of the appended claims.

## Claims

1. A shapable decorative plate, characterised in that said shapable decorative plate includes:
   a magnetic rubber layer to which ferreous decorations can be attracted; and
   an aluminum layer attached to at least one side of said magnetic layer.

2. A decorative plate according to claim 1, further including a leather layer attached to at least one side of said attached aluminum and magnetic rubber layer.

3. A decorative plate according to claim 1, further including a cloth attached to at least one side of said attached aluminum and magnetic rubber layer.

4. A decorative plate according to claim 2, further including a net attached to an outer side of said leather layer.

5. A decorative plate according to claim 3, further including a net attached to an outer side of said leather layer.

6. A shapable decorative plate characterised in that said shapable decorative plate includes:
   an aluminum layer; and
   a magnetic rubber layer attached to each side of said aluminum layer.

7. A decorative plate according to claim 6, further including a leather layer attached to at least one side of said attached aluminum and magnetic rubber layer.

8. A decorative plate according to claim 6, further including a cloth attached to at least one side of said attached aluminum and magnetic rubber layer.

9. A decorative plate according to claim 7, further including a net attached to an outer side of said leather layer.

10. A decorative plate according to claim 8, further including a net attached to an outer side of said leather layer.

FIG. 1

FIG. 2

FIG. 3

FIG. 4

FIG. 5

1

FIG. 6

FIG. 7

FIG. 8

FIG. 9

FIG. 10

FIG. 11

European
Patent Office

**EUROPEAN SEARCH
REPORT**

Application Number

**EP 90 11 9756**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 088 105 (LAPORTE)<br>* Figures; claims 1,2,6 *<br>– – – | 1 | B 32 B 15/06<br>B 44 C 5/00 |
| A | US-A-1 978 883 (J.A. PETTIT)<br>* Page 1, lines 39-65; figures *<br>– – – – – | 1,2 | |

| | TECHNICAL FIELDS SEARCHED (Int. Cl.5) |
|---|---|
| | B 32 B<br>B 44 C |

The present search report has been drawn up for all claims

| Place of search | Date of completion of search | Examiner |
|---|---|---|
| The Hague | 24 May 91 | MCCONNELL C.H. |

CATEGORY OF CITED DOCUMENTS

X : particularly relevant if taken alone
Y : particularly relevant if combined with another
   document of the same catagory
A : technological background
O : non-written disclosure
P : intermediate document
T : theory or principle underlying the invention

E : earlier patent document, but published on, or after
   the filing date
D : document cited in the application
L : document cited for other reasons

&: member of the same patent family, corresponding
   document